# EUROPEAN PATENT APPLICATION

(11) **EP 1 980 146 A1**
(43) Date of publication of application: **15.10.2008**
(21) Application number: 06841775.7
(22) Date of filing: 29.12.2006
(51) Int. Cl.: A01G 13/00

(54) **SYSTEM FOR THE INDIVIDUAL PACKAGING OF PEACHES AND OTHER FRUITS AND VEGETABLES HAVING A SUITABLE SHAPE**

(30) Priority: 16.01.2006 ES 200600091
(71) Applicant: Secur Fruit, S.L., 22520 Fraga (Huesca) (ES); Labrador Agustin, Jorge, 22520 Fraga (Huesca) (ES)
(72) Inventor: Labrador Agustin, Jorge, 22520 Fraga (Huesca) (ES)
(74) Representative: Schäfer, Matthias W.
(86) International application number: PCT/ES2006/000723
(87) International publication number: WO 2007/080200

(57) **Abstract**

An individual packaging system for peaches and other fruit and vegetables having a suitable shape, **characterised in that** it is performed from the setting of the fruit up to the distribution and consumption thereof, using a conical container of recyclable plastic material having a solar protection filter disposed around the edge thereof and small perforations both in the lower part, and, if relevant, in the top cover, such as to facilitate the respiration and transpiration of rainwater. The top part is provided with a cover which is clipped or screwed on hermetically and two opposing radial perforations with gaskets which enable the container to be coupled perfectly to the branch of the fruit tree, such as to prevent the ingress of external agents such as phytosanitary products, pests or diseases, thereby providing protection from hail and spring frosts, furthermore allowing the fruit to develop perfectly until it is fully mature.

The invention relates to an artisanal fruit since, at the time of picking, the branch is cut at both ends of the container such that it remains inside the same and the fruit can be detached from the branch for consumption once the container has been opened.

## Description

An individual packaging system for peaches and other fruit and vegetables having a suitable shape, characterised in that it is performed from the setting of the fruit up to the distribution and consumption thereof, using a conical container of recyclable plastic material having a solar protection filter disposed around the edge thereof and small perforations both in the top cover and lower part, such as to facilitate the drainage of rainwater. The top part of the container is provided with a cover which is clipped or screwed on hermetically and two opposing perforations with gaskets which enable the container to be coupled perfectly to the branch of the fruit tree, such as to prevent the ingress of external agents such as phytosanitary products, pests or diseases and reducing the damage caused by hail and spring frosts, so that the fruit can develop perfectly until it is fully matured.

The invention relates to an artisanal fruit since, at the time of picking, the branch is cut at both ends of the container such that part thereof remains inside the same and the fruit can be detached from the branch for consumption once the container has been opened.

At the current time a similar system is already know which is used for peaches (and, in some ways, equally similar to that applicable for the bagging of grapes); it consists of a paper bag for the purpose of covering the fruit, which is put in place by making a fold in the top part and closing it by conventional stapling.

In principle this protection of the fruit should be sufficient to safeguard it from external agents such as, for example, rain and hail, but the greatest disadvantage lies in that the paper does not withstand the intensity of rain nor that of hail and that it tears, leaving the fruit exposed to inclement weather and totally exposed to the ingress of external agents such as pests or diseases, without protection from hail and spring frosts, being also a fruit that is easy for insects and birds to access, causing the deterioration of the external aspect of the fruit, and detracting from its appearance to consumers.

Moreover, paper does not resist well the phytosanitary treatments to which the fruit is subjected during the maturing period, since numerous insects and fungi can attack the fruit, and treatments have to be carried out too frequently.

In these cases the paper becomes soaked with the phytosanitary products, obviously impregnating the fruit and reducing food safety, since the fruit has to be handled to clean it before it is marketed.

Once the peach is mature, it is picked and the paper bags that have not been torn are removed, the fruit is selected by colour, size and those that a free of marks are chosen, they are cleaned and directly packed, wrapping some of the peaches in paper.

A disadvantage of the use of this system is that it involves a great wastage of the product, given that during maturing and when the paper bags tear due to the effect of the rain, the fruit is already damaged and also during picking, the fruit is damaged or bruised by the blows it receives

Another disadvantage in terms of wastage of fruit must be added, since when the fruit is detached from the branch, on occasions tearing of the skin may occur in the area of the peduncle (or, in other fruit, the breakage of the stalk that joins it to the branch), causing a deteriorated appearance of the fruit and resulting in its withdrawal.

Furthermore, more fruit is affected by the aforementioned wastage since plastic and wooden containers are used that have been employed in previous harvests and they may still contain fruit residues and, in some cases, rotting matter that can contaminate fruit that was healthy when picked, but that is affected by post-harvest diseases during warehouse storage, with the added danger that the rest of the fruit may gradually become contaminated.

To resolve the current problems, a system has been designed for the individual packaging of peaches and other fruit and vegetables having a suitable shape, (defined hereinafter as "fruit", notwithstanding the ideal and specialised nature of the system for its application with peaches) wherein a container is placed on the fruit tree, from the setting of the fruit, guaranteeing its protection and maturing until picking, allowing an individually packaged, totally artisanal fruit to be distributed on the market.

The system proposes a preferably truncated cone container made of recyclable plastic material, having small perforations in its bottom part and, if relevant, on the top cover, facilitating the respiration and transpiration of rain water and, on the top part it incorporates a cover, perforated, if relevant, for the same purpose, which is screwed or clipped on hermetically and several small ridges on its outer part to facilitate tightening.

The top part of the container has two radial openings with opposing gaskets for its perfect coupling to the branch of the fruit tree; it is then closed with the cover by means of the screwed section, such that the fruit remains isolated and protected, permitting it to develop perfectly until it is fully matured on the tree, achieving the acidity, sugar and colour required for a quality fruit, and endowing it with an ideal appearance for consumption given that, since it develops fully on the tree the size of the fruit (and particularly the size of the peach) is greater since picking can be postponed.

The fruit withstands inclement weather conditions such as rain, wind, hail, and spring frosts until maturity thanks to its plastic container, as well as being protected from pests, birds and diseases (fungi, bacteria and viruses), tolerating phytosanitary treatments well, and reducing the number of such treatments required, which in turn results in a notable reduction in their impact on the fruit and avoids environmental contamination.

The container in question incorporates a solar protection filter around the whole of its contour which is recyclable and performs the function of protecting the fruit; hence, to focus on the application of the present invention in relation to peaches, these may be of several types and it is desirable for the colour of the peach to be as homogeneous as possible, to this end the use of the filter is essential since its colour and opaqueness may vary depending on the variety of the fruit and the desired effect in the end product.

Another important protection resulting from the use of the filter is that of the container itself, since dust and dirt fall on and are stored by the filter, which can be removed after picking.

The invention also proposes a significant novelty in that at the time of harvesting, when the fruit is in optimum conditions for picking, the branch is cut at both ends of the container, such that a part thereof remains inside the same, removing the solar protection filter and leaving the container totally free of impurities and adhering to the cover an adhesive that bears the brand and register codes, so that it is ready for distribution and consumption.

The fruit obtained is artisanal, maintaining a natural quality since it has been in an almost hermetic container, providing it with unique maturing and food safety characteristics, guaranteed by the selfsame packaging, given that it is when it is opened for consumption that it can be detached from the branch on which it has matured until picking.

This "individual packaging system for peaches and other fruits and vegetables having a suitable shape" that is presented offers multiple advantages over other currently available systems, the most significant being that the fruit, from its setting to its picking, remains protected by a container until it has fully matured.

Another important advantage of this invention, which is a consequence of the previous one, is that the truncated cone-shaped container, preferably made of plastic material, with a top cover that closes hermetically and being totally recyclable, incorporates a solar protection filter that may vary in so far as its colour and opaqueness, depending on the variety of peach, fruit or vegetable to be packed, protecting it from rain, wind, hail and spring frosts as well as avoiding the deterioration of the fruit due to pests, diseases and birds, in addition to offering significant protection from phytosanitary treatments, as well as reducing the number of treatments, with the corresponding economic and labour costs to be assigned.

Another advantage we can add is the hermetic closing of the container by means of gaskets housed in the grooves on which the branch of the fruit tree rests, guaranteeing the tightness of the container and the quality of the fruit obtained.

A very important advantage is that at picking the branch is cut at both ends of the container, remaining inside the same, and the solar protection filter is then removed to leave a container that is free of impurities, the brand and code register labels being adhered to the cover so that it is ready for distribution and consumption.

It is pertinent to underline the unquestionable advantages of obtaining an artisanal fruit, maintaining a natural quality since it has been in an almost hermetic container, providing it with unique maturing and food safety characteristics, guaranteed by the selfsame packaging, given that it is when it is opened for consumption that it can be detached from the branch on which it has matured until picking.

Likewise, it is pertinent to underline, as an advantage, the enormous possibilities it offers for diverse fruits provided that the cost-effectiveness of its use so advises, as well as being able to be used for many varieties of vegetables.

And lastly, an important advantage is that the system presented avoids wastage of fruit since during picking the system prevents rubbing between fruit and tearing of the skin in the area of the peduncle due to the individual container; it also avoids risks involved in handling and, what is most important, the risks of post-harvest contamination of one fruit to another since no type of container, already employed in previous harvests, is used.

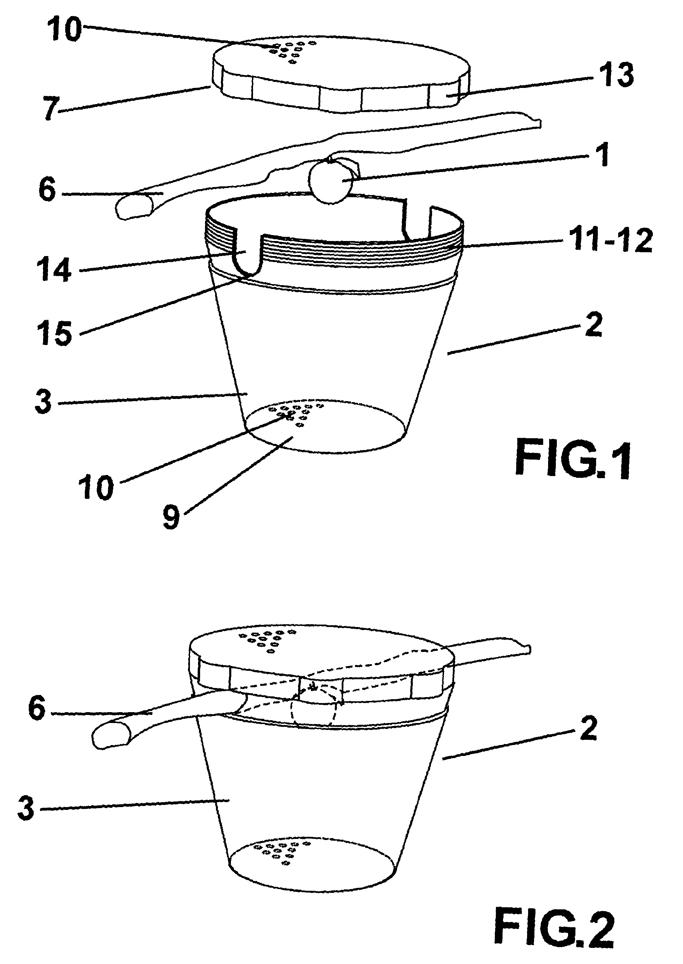

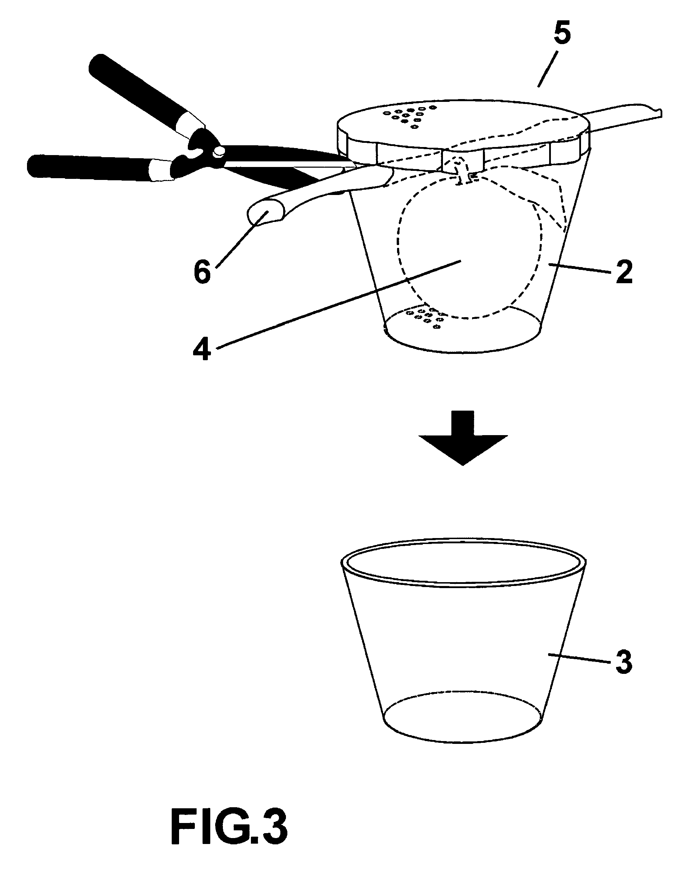

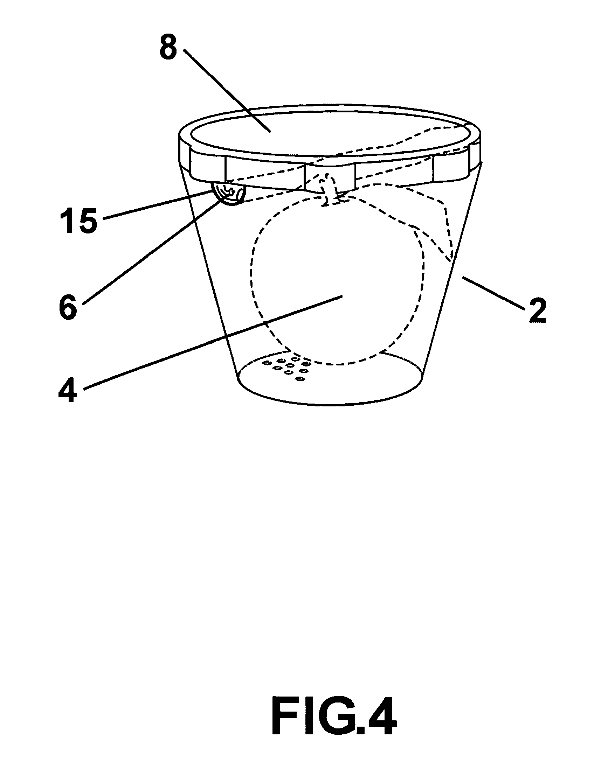

In order to gain a better understanding of the present invention the attached drawing shows a preferred practical embodiment of the same.

In said drawing figure - 1 - shows the protective container initiating the packaging system.

Figure - 2 - shows the closed container, mounted on the fruit tree.

Figure - 3 - shows the closed container with the fruit (represented in the figure by a peach) already matured inside, in the picking process.

Figure - 4 - shows the closed container, with the branch cut inside it, without the solar protection filter, in a state ready for distribution and consumption.

The individual packaging system for peaches and other fruit and vegetables having a suitable shape that is presented consists of the protection of a fruit (4) by means of a container (2), of preferably recyclable plastic material, having a solar protection filter (3), from the setting of the fruit (1) until it is fully mature, protecting it from external agents such as rain, wind, hail and spring frosts; as well as from pests, diseases, birds and phytosanitary treatments.

At the time of picking (5) the branches (6) are cut at both ends of the container (2) such that they remain inside the same, the solar protection filter (3) is removed such that the container remains free of any impurities and to the cover (7) an adhesive (8) is adhered with the brand and register codes, so that it is thereby ready for its distribution and consumption.

The container (2) preferably in the shape of a truncated cone made from recyclable plastic material, with a solar protection filter (3), incorporating in the lower part (9) small holes (10) for the drainage of rain water, and in the top part a cover (7), also perforated for the same purpose, with hermetic screwed (11) or clipped (12) closure, and several small ridges (13) around its contour to facilitate tightening of the same.

On its top part the container (2) is provided with two radial openings (14) with opposing gaskets (15) for perfect coupling to the branch (6) of the fruit tree, and it is then closed with the cover (7) by means of the screwed section, such that the fruit remains isolated and protected, permitting it to develop perfectly until it is fully matured on the tree.

It was decided to omit a detailed description of the other particular features of the system being disclosed or of the components forming part of it, as it was felt that the rest of said particular features are not the object of any claims.

Having described the nature of the present invention in sufficient detail, in addition to the means of putting it into practice, all that remains to be added is that its description is not restrictive, and that variations both in materials and shapes, sizes or devices can be made provided that said variations do not alter the essential nature of the characteristics claimed below.

## Claims

1. - Individual packaging system for peaches and other fruit and vegetables having a suitable shape, **wherein** a fruit (4) is protected by means of a container (2), of recyclable plastic material, having a solar protection filter (3), of a variable constitution in terms of colour and opaqueness, depending on the variety of the fruit, from the setting of the fruit (1) until its full maturity, protecting it from external agents such as rain, wind, hail and spring frosts; from pests, diseases, birds, molluscs and rodents and from phytosanitary treatments.

2. - Individual packaging system for peaches and other fruit and vegetables having a suitable shape, according to the preceding claim, **wherein** at the time of picking (5) the branches (6) are cut at both ends of the container (2) such that they remain inside the same, the solar protection filter (3) is removed such that the container remains free of any impurities and to the cover (7) an adhesive (8) is adhered with the brand and register codes, so that it is thereby ready for its distribution and consumption.

3. - Individual packaging system for peaches and other fruit and vegetables having a suitable shape, according to the preceding claims, **wherein** the container (2) is in the shape of a truncated cone, preferably made of recyclable plastic material, with a solar protection filter (3), incorporating in the lower part (9) small holes (10) for the drainage of rain water, and in the top part a cover (7), which may also be perforated for the same purpose, with hermetic screwed (11) or clipped (12) closure, and several small ridges (13) on its external part to facilitate tightening of the same.

4. - Individual packaging system for peaches and other fruit and vegetables having a suitable shape, according to the preceding claims, **wherein** the container (2), on its top part, incorporates two radial openings (14) with opposing gaskets (15) for perfect coupling to the branch (6) of the fruit tree, and it is then closed with the cover (7) by means of the screwed section, such that the fruit remains isolated and protected, permitting it to develop perfectly until it is fully matured on the tree, achieving the acidity, sugar and colour required for a totally artisanal, quality fruit and endowing it with an ideal appearance for consumption given that, because it develops fully on the tree, the size of the fruit (4) is greater, also guaranteeing food safety thanks to the container, since it is when the container is opened for consumption that the fruit can be detached from the branch on which it has matured until picking.
